# EUROPEAN PATENT APPLICATION

(11) **EP 1 793 111 A1**
(43) Date of publication of application: **06.06.2007**
(21) Application number: 05728876.3
(22) Date of filing: 05.04.2005
(51) Int. Cl.: F02G 5/00, F01K 25/10, F01K 27/02, F01P 3/20, F02B 29/04, F02B 33/44, F02B 37/00, F15B 21/04, F15B 21/14

(54) **WASTE HEAT ENERGY REGENERATING METHOD AND WASTE HEAT ENERGY REGENERATING APPARATUS**

(30) Priority: 21.09.2004 JP 2004273991
(71) Applicant: Shin Caterpillar Mitsubishi Ltd., Tokyo 158-8530 (JP)
(72) Inventor: YOSHINO, K., Shin Caterpillar Mitsubishi Ltd., Tokyo 1588530 (JP)
(74) Representative: Ablett, Graham Keith
(86) International application number: PCT/JP2005/006628
(87) International publication number: WO 2006/033182

(57) **Abstract**

An oil cooler 16a for cooling hydraulic oil that has increased in temperature due to energy loss in a hydraulic circuit 25, a radiator 16b for cooling engine cooling water that has increased in temperature as a result of cooling an engine 11, and an ATAAC 16c for cooling engine intake air that has increased in temperature as a result of being compressed by a turbocharger, are provided with heat pipes 41a,41b,41c for vaporizing low-boiling medium by absorbing heat from the oil cooler 16a, the radiator 16b, and the ATAAC 16c. A power recovery turbine 24 adapted to be rotated by means of energy provided by vaporized low-boiling medium is provided for the engine 11. A low-boiling medium circuit 38 is provided so as to drive the turbine 24 by feeding the low-boiling medium that has been vaporized by waste heat energy. The low-boiling medium circuit 38 includes the heat pipes 41a,41b,41c of the oil cooler 16a, the radiator 16b, and the ATAAC 16c, as well as the turbine 24.

## Description

### Technical Field

### Field of the Invention

The present invention relates to a waste heat energy recovery method and a waste heat energy recovery system for recovering waste heat energy generated from a hydraulic circuit or any other similar system.

### Background Art

A conventional construction machine typically has such a configuration that power is supplied from an engine, which is normally a diesel engine, to a main pump so that pressurized oil is fed from the main pump to actuator control valves.

An actuator that has been supplied with pressurized oil fed from the corresponding actuator control valve performs a certain net amount of work on an external entity, while the remaining energy is transformed to thermal energy that is dispersed into the air, as it is lost through various relief valves, reduction of the internal area of the control valve, and piping resistance.

An oil cooler is provided to reduce the temperature of the hydraulic oil, because a rise in the temperature of the hydraulic oil causes thermal degradation of the oil as well as a decrease in its viscosity, resulting in damage to hydraulic equipment. However, the engine has to supply additional power to drive a rotary fluid cooling machine, such as a cooling fan, for cooling the radiation fins of the oil cooler externally (e.g. see Patent Reference Document 1).

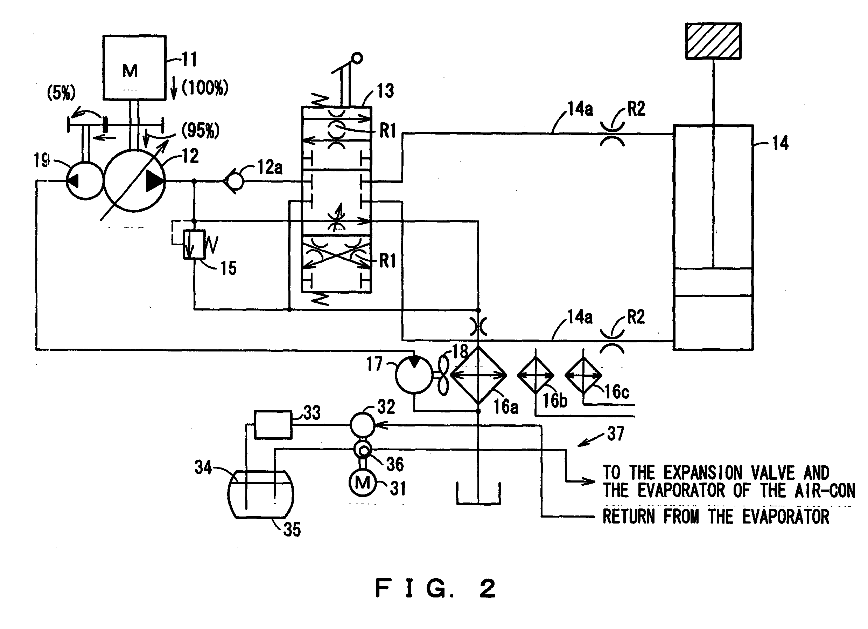

The abovementioned conventional art is explained hereunder, referring to Fig. 2. A main pump 12 driven by a diesel engine 11 discharges oil, which is fed as pressurized oil through a check valve 12a to an actuator control valve 13. The pressurized oil is fed from the actuator control valve 13 through a pipeline 14a to an actuator 14 so that the actuator 14 performs a certain net amount of work on an external entity. Due to energy loss through heat generation by the actuator 14, various relief valves 15, internal area reduction R1 of the actuator control valve 13, and piping resistance R2 of the pipeline 14a, etc., the remaining energy is transformed to thermal energy, most of which is dispersed as a result of increasing the temperature of the hydraulic oil.

As a rise in the temperature of the hydraulic oil causes thermal degradation of the oil as well as a decrease in its viscosity, resulting in shorter life of hydraulic equipment, the radiation fins of an oil cooler 16a are air-cooled by a cooling fan 18, which is driven by an externally provided hydraulic cooling motor 17 in order to reduce temperature of the hydraulic oil. In order to drive the hydraulic cooling motor 17, a hydraulic cooling pump 19 is provided, with its gears adapted to be driven by the engine 11 so that pressurized oil is fed from the hydraulic cooling pump 19 to the hydraulic cooling motor 17. Therefore, the engine 11 is required to supply power in addition to the power supplied to the main pump 12.

Similar energy loss also occurs in the cooling system of the engine 11, in which fossil fuel, such as diesel oil, burns to generate energy to be supplied in the form of shaft power to the pump system. As much of the energy that is not consumed as the shaft power becomes thermal energy and increases the temperature of engine cooling water, the cooling fan 18, which is driven by the aforementioned hydraulic cooling motor 17, cools by means of air the radiation fins of a radiator 16b in order to reduce the temperature of the engine cooling water. As a result, the thermal energy dissipates in the air through the radiation fins of the radiator 16b. The radiator 16b is a heat exchanger provided in the engine cooling water circuit.

Furthermore, as the temperature of the engine intake air that has been pressurized by a turbocharger (not shown) provided in an engine intake system becomes high, the cooling fan 18, which is driven by the hydraulic cooling motor 17, cools by means of air the radiation fins of an air-to-air after-cooler (hereinafter referred to as ATAAC) 16c in order to cool the engine intake air, thereby increasing the air intake efficiency of the engine 11, as well as reducing combustion temperature so as to reduce the amount of nitrogen oxides generated. As a result, the thermal energy of the pressurized engine intake air dissipates in the air through the radiation fins of the ATAAC 16c, which is provided in an intercooler circuit.
Patent Reference Document 1: Japanese Laid-open Patent Publication No. 2000-257608 (pp 3, Fig. 2)

### Disclosure of the Invention

### Problems to Be Solved by the Invention:

As described above, the radiation fins of the oil cooler 16a, the radiation fins of the radiator 16b, and the radiation fins of the ATAAC 16c are air-cooled by the cooling fan 18,which is driven by the externally provided hydraulic cooling motor 17, in order to reduce the temperatures of the hydraulic oil and other fluids, i.e. the engine cooling water and the engine intake air. In order to drive the hydraulic cooling motor 17, the aforementioned hydraulic cooling pump 19 is provided, separately from the main pump 12, in a pump assembly attached to an output shaft of the engine 11, so as to feed pressurized oil from the hydraulic cooling pump 19 to the hydraulic cooling motor 17.

Therefore, the engine 11 is required to supply power in addition to the power supplied to the main pump 12. Moreover, thermal energy dissipates in the air through the radiation fins of the oil cooler 16a, which is a heat exchanger, as well as the radiation fins of the radiator 16b and ATAAC 16c.

This presents the problem of substantial power loss of the engine 11, resulting in very poor energy use efficiency.

In Fig. 2, which provides an example using concrete values to explain the above problem, 95% of the shaft output power of the engine 11 is the effective shaft input power to the main pump 12, while the remaining 5% is the effective shaft input power to the hydraulic cooling pump 19.

In order to solve the above problem, an object of the present invention is to improve the energy use efficiency of the engine.

### Means for Solving Problems

The present invention as claimed in claim 1 provides a waste heat energy recovery method for recovering waste heat energy by using a low-boiling medium to absorb waste heat energy from hydraulic oil that has increased in temperature as a result of loss of energy in a hydraulic circuit that includes a pump adapted to be driven by an engine, as well as waste heat energy from another fluid that has increased in temperature as a result of operation of the engine, and rotating a power recovery turbine by utilizing the low-boiling medium that has vaporized as a result of absorbing the heat so as to boost the power of the engine by means of the turbine. By transferring waste heat energy to the low-boiling medium from the hydraulic oil that has increased in temperature as a result of loss of energy in the hydraulic circuit as well the other fluid that has increased in temperature as a result of operation of the engine, the hydraulic oil and the other fluid are cooled while the low-boiling medium is vaporized, so that the vaporized low-boiling medium rotates the turbine, which then provides a boost to the engine and thereby recovers the waste heat energy. As a part of the lost engine power, which would, in case of a conventional art, wastefully dissipate into the air as waste heat energy of the hydraulic oil and the other fluid, is effectively recirculated to the engine through the turbine, the energy use efficiency of the engine is improved.

The present invention as claimed in claim 2 also provides a waste heat energy recovery system having an oil cooler, another cooling means, a power recovery turbine, and a low-boiling medium circuit. The oil cooler serves to cool hydraulic oil that has increased in temperature as a result of loss of energy in a hydraulic circuit that includes a pump adapted to be driven by an engine. The other cooling means serves to cool another fluid that has increased in temperature as a result of operation of the engine. The aforementioned turbine is provided for the engine and adapted to be rotated by energy provided by a vaporized low-boiling medium. The low-boiling medium circuit serves to drive the turbine by providing the turbine with the low-boiling medium that has been vaporized by waste heat energy from the oil cooler and the other cooling means. With the configuration as above, by transferring waste heat energy to the low-boiling medium from the hydraulic oil that has increased in temperature as a result of loss of energy in the hydraulic circuit as well as the other fluid that has increased in temperature as a result of operation of the engine, the hydraulic oil and the other fluid are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler and the other cooling means, is effectively recirculated to the engine by means of the low-boiling medium circuit and the turbine, the energy use efficiency of the engine is improved.

According to another feature of the present invention as claimed in claim 3, the aforementioned other cooling means of a waste heat energy recovery system as claimed in claim 2 is a radiator for cooling engine cooling water that has increased in temperature as a result of cooling the engine. With the configuration as above, by transferring waste heat energy from the hydraulic oil and engine cooling water to the low-boiling medium, the hydraulic oil and the engine cooling water are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler and the radiator, is effectively recirculated to the engine by means of the low-boiling medium circuit and the turbine, the energy use efficiency of the engine is improved.

According to yet another feature of the present invention as claimed in claim 4, the aforementioned other cooling means of a waste heat energy recovery system as claimed in claim 2 is an intake air cooler for cooling engine intake air that has increased in temperature as a result of being compressed by a turbocharger. With the configuration as above, by transferring waste heat energy to the low-boiling medium from the hydraulic oil that has increased in temperature as a result of loss of energy in the hydraulic circuit as well as the engine intake air that has increased in temperature as a result of being compressed by the turbocharger, the hydraulic oil and the engine intake air are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler and the intake air cooler, is effectively recirculated to the engine by means of the low-boiling medium circuit and the turbine, the energy use efficiency of the engine is improved.

According to yet another feature thereof, the present invention as claimed in claim 5 provides a waste heat energy recovery system having an oil cooler, a radiator, an intake air cooler, a power recovery turbine, and a low-boiling medium circuit. The oil cooler serves to cool hydraulic oil that has increased in temperature as a result of loss of energy in a hydraulic circuit that includes a pump adapted to be driven by an engine. The radiator serves to cool engine cooling water that has increased in temperature as a result of cooling the engine. The intake air cooler serves to cool engine intake air that has increased in temperature as a result of being compressed by a turbocharger. The aforementioned turbine is provided for the engine and adapted to be rotated by energy provided by a vaporized low-boiling medium. The low-boiling medium circuit serves to drive the turbine by providing the turbine with the low-boiling medium that has been vaporized by waste heat energy from the oil cooler, the radiator, and the intake air cooler. With the configuration as above, by transferring waste heat energy to the low-boiling medium from the hydraulic oil that has increased in temperature as a result of loss of energy in the hydraulic circuit, the engine cooling water that has increased in temperature as a result of cooling the engine, and also from the engine intake air that has increased in temperature as a result of being compressed by the turbocharger, the hydraulic oil, the engine cooling water, and the engine intake air are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler, the radiator, and the intake air cooler, is effectively recirculated to the engine by means of the low-boiling medium circuit and the turbine, the energy use efficiency of the engine is improved.

According to yet another feature of the present invention as claimed in claim 6, the low-boiling medium circuit as claimed in any one of the claims from claim 2 to claim 5 includes heat pipes, a feed line, and a return line, the aforementioned heat pipes serving to permit a part of the low-boiling medium fed from a low-boiling medium pump to an evaporator of an air conditioning device circuit to branch off from the air conditioning device circuit and pass through the oil cooler and the other cooling means so that the low-boiling medium vaporizes by absorbing heat from the oil cooler and the other cooling means, the aforementioned air conditioning device circuit including a compressor, a condenser, a receiver, the aforementioned low-boiling medium pump, an expansion valve, and the aforementioned evaporator, all of which are installed in a construction machine and connected to one another in an endless circuit, the aforementioned feed line serving to provide the turbine with low-boiling medium that has been vaporized inside the heat pipes, and the aforementioned return line serving to recirculate the low-boiling medium from the turbine to the intake end of the compressor of the air conditioning device circuit. With the configuration as above, when a part of the low-boiling medium fed to the evaporator of the air conditioning device circuit installed in the construction machine branches off and passes through the heat pipes, the waste heat energy of the hydraulic oil that has increased in temperature as a result of loss of energy as well as the other fluid that has increased in temperature as a result of operation of the engine is transferred to the aforementioned part of the low-boiling medium. As a result, the hydraulic oil and the other fluid are cooled while the low-boiling medium in the heat pipes is vaporized, the vaporized low-boiling medium is fed through the feed line to the turbine and thereby drives the turbine, and the low-boiling medium from the turbine is recirculated through the return line to the intake end of the compressor. As the configuration described above enables an air conditioning device circuit to be provided at lower cost by effectively using a part of the air conditioning device circuit already incorporated in the construction machine, eliminates the necessity of conventional expensive components, such as a cooling motor and a cooling pump for driving a cooling fan, and also eliminates the power loss resulting from driving the cooling pump, the configuration described above is cost effective.

According to yet another feature of the present invention as claimed in claim 7, the aforementioned turbine as claimed in any one of the claims from claim 2 to claim 6 is connected to a power transmission system, which branches off from a power transmission unit that enables the engine to drive the pump. By using the power transmission system, which branches off from the power transmission unit that enables the engine to drive the pump, the configuration described above facilitates installation of the turbine. Furthermore, by driving the turbine by means of the low-boiling medium vapor that has been vaporized by the waste heat energy from the oil cooler and the waste heat energy from the other cooling means, and feeding driving torque generated in the turbine to the engine through the power transmission system, the configuration described above reduces the driving power of the engine to drive the pump, thereby enabling reduction of fuel consumption by the engine, as well as effective recovery of thermal energy lost in the hydraulic circuit.

### Effects of the Invention

According to the present invention as claimed in claim 1, by transferring waste heat energy to a low-boiling medium from the hydraulic oil that has increased in temperature as a result of loss of energy in the hydraulic circuit as well as the other fluid that has increased in temperature as a result of operation of the engine, the hydraulic oil and the other fluid are cooled while the low-boiling medium is vaporized, so that the vaporized low-boiling medium rotates the turbine, which then provides a boost to the engine and thereby recovers the waste heat energy. As a part of the lost engine power, which would, in case of a conventional art, wastefully dissipate from the hydraulic oil and the other fluid into the air as waste heat energy, can be effectively recirculated to the engine through the turbine, the energy use efficiency of the engine can be improved.

According to another feature of the present invention as claimed in claim 2, by transferring waste heat energy to the low-boiling medium from the hydraulic oil that has increased in temperature as a result of loss of energy in the hydraulic circuit as well as the other fluid that has increased in temperature as a result of operation of the engine, the hydraulic oil and the other fluid are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler and the other cooling means, can be effectively recirculated to the engine by means of the low-boiling medium circuit and the turbine, the energy use efficiency of the engine can be improved.

According to yet another feature of the present invention as claimed in claim 3, by transferring waste heat energy from the hydraulic oil and engine cooling water to the low-boiling medium, the hydraulic oil and the engine cooling water are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler and the radiator, can be effectively recirculated to the engine by means of the low-boiling medium circuit and the turbine, the energy use efficiency of the engine can be improved.

According to yet another feature of the present invention as claimed in claim 4, by transferring waste heat energy to the low-boiling medium from the hydraulic oil that has increased in temperature as a result of loss of energy in the hydraulic circuit as well as the engine intake air that has increased in temperature as a result of being compressed by the turbocharger, the hydraulic oil and the engine intake air are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler and the intake air cooler, can be effectively recirculated to the engine by means of the low-boiling medium circuit and the turbine, the energy use efficiency of the engine can be improved.

According to yet another feature of the present invention as claimed in claim 5, by transferring waste heat energy to the low-boiling medium from the hydraulic oil that has increased in temperature as a result of loss of energy in the hydraulic circuit, the engine cooling water that has increased in temperature as a result of cooling the engine, and also from the engine intake air that has increased in temperature as a result of being compressed by the turbocharger, the hydraulic oil, the engine cooling water, and the engine intake air are cooled while the low-boiling medium is vaporized. And by providing the turbine with the vaporized low-boiling medium through the low-boiling medium circuit in order to drive the turbine so that the turbine provides a boost to the engine and thereby recovers the waste heat energy. As a part of the lost engine power, which would, in case of a conventional art, wastefully dissipate into the air as waste heat energy from the oil cooler, the radiator, and the intake air cooler, can be effectively recirculated to the engine by means of the low-boiling medium circuit and the turbine, the energy use efficiency of the engine can be improved.

According to yet another feature of the present invention as claimed in claim 6, when a part of the low-boiling medium fed to the evaporator of the air conditioning device circuit installed in the construction machine branches off and passes through the heat pipes, the waste heat energy of the hydraulic oil that has increased in temperature as a result of loss of energy as well as the other fluid that has increased in temperature as a result of operation of the engine is transferred to the aforementioned part of the low-boiling medium. As a result, the hydraulic oil and the other fluid are cooled while the low-boiling medium in the heat pipes is vaporized, the vaporized low-boiling medium is fed through the feed line to the turbine and thereby drives the turbine, and the low-boiling medium from the turbine is recirculated through the return line to the intake end of the compressor. As the configuration described above enables an air conditioning device circuit to be provided at lower cost by effectively using a part of the air conditioning device circuit already incorporated in the construction machine, eliminates the necessity of conventional expensive components, such as a cooling motor and a cooling pump for driving a cooling fan, and also eliminates the power loss resulting from driving the cooling pump, the configuration described above is cost effective.

According to yet another feature of the present invention as claimed in claim 7, by using the power transmission system, which branches off from the power transmission unit that enables the engine to drive the pump, the configuration described above facilitates installation of the turbine. Furthermore, by driving the turbine by means of the low-boiling medium vapor that has been vaporized by the waste heat energy from the oil cooler and the waste heat energy from the other cooling means, and feeding driving torque generated in the turbine to the engine through the power transmission system, the configuration described above reduces the driving power of the engine to drive the pump, thereby enabling reduction of fuel consumption by the engine, as well as effective recovery of thermal energy lost in the hydraulic circuit.

### Brief Description of the Drawings

Fig. 1 is a fluid circuit diagram of a waste heat energy recovery system according to an embodiment of the present invention.
Fig. 2 is a circuit diagram of a conventional hydraulic circuit.

### Description of Symbols

- 11: engine
- 12: main pump as a pump
- 16a: oil cooler
- 16b: radiator as another cooling means
- 16c: intake air cooler (ATAAC) as yet another cooling means
- 21: driving shaft unit as a power transmission unit
- 22: engine gear unit as a power transmission system
- 24: turbine
- 25: hydraulic circuit
- 32: compressor
- 33: condenser
- 34: low-boiling medium
- 35: receiver
- 36: low-boiling medium pump
- 37: air-con circuit as an air conditioning device circuit
- 38: low-boiling medium circuit
- 41a,41b,41c: heat pipe
- 42: feed line
- 43: return line

### Best Mode for Carrying Out the Invention

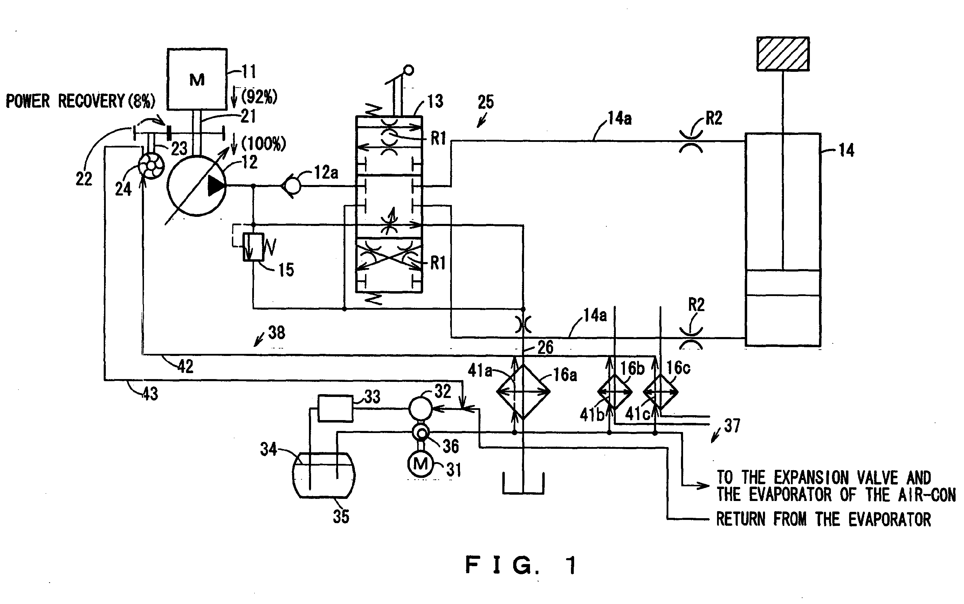

The present invention is explained hereunder, referring to Fig. 1. The elements similar to those of the conventional art shown in Fig. 2 are identified with the same reference codes, and their explanation is omitted hereunder.

As shown in Fig. 1, a diesel engine (hereinafter simply referred to as engine) 11 is mounted on a construction machine, such as a hydraulic excavator. The engine 11 is adapted to drive a pump, i.e. main pump 12, through a driving shaft unit 21 and an engine gear unit 22 that branches off from the driving shaft unit 21. The driving shaft unit 21 serves as a power transmission unit, and the engine gear unit 22 serves as a power transmission system. In place of a conventional hydraulic cooling pump 19, a steam turbine (hereinafter simply referred to as turbine) 24 is provided for the engine 11. The turbine 24 is a small power recovery turbine adapted to be rotated by means of energy provided by vaporized low-boiling medium (what is widely known as refrigerant) and is connected to a shaft 23 of the engine gear unit 22.

The temperature of hydraulic oil increases and generates thermal energy as a result of loss of hydraulic energy from hydraulic output from a hydraulic circuit 25, which includes the main pump 12, the aforementioned energy loss being the remaining energy after subtracting the energy consumed in the hydraulic circuit 25 for effective work. As most of this thermal energy passes through an oil cooler 16a, which is a heat exchanger provided in a hydraulic oil return circuit 26, the oil cooler 16a is adapted to cool the hydraulic oil that has increased in temperature.

As was the case with the oil cooler 16a, other cooling means are provided to cool other fluids whose temperature increases with operation of the engine 11. In the case of the present embodiment, the other cooling means are a radiator 16b for cooling engine cooling water and an intake air cooler 16c, such as an air-to-air after-cooler (hereinafter referred to as ATAAC), for cooling engine intake air.

To be more specific, similar energy loss also occurs in the cooling system of the engine 11, in which fossil fuel, such as diesel oil, burns to generate energy to be supplied in the form of shaft power to the pump system. Much of the energy that is not consumed as the shaft power becomes thermal energy and passes through the radiator 16b, which is provided in an engine cooling water circuit. Therefore, the radiator 16b is adapted to cool the engine cooling water that has increased in temperature due to cooling the engine 11, in other words, due to waste of combustion energy in the engine 11.

Furthermore, when the engine intake air is compressed by a turbocharger (not shown) that is provided in an engine intake system, the temperature of the engine intake air increases. Therefore, the ATAAC 16c, which is provided in an intercooler circuit, is adapted to cool the engine intake air that has increased in temperature, thereby increasing the air intake efficiency of the engine 11, as well as reducing its combustion temperature so as to reduce the amount of nitrogen oxides generated.

A normal air conditioning device (hereinafter simply referred to as air-con) that is mounted on a construction machine, such as a hydraulic excavator, has an air-con circuit 37, which may otherwise be referred to as an air conditioning device circuit comprises a compressor 32, a condenser 33, a receiver 35, a low-boiling medium pump 36, an expansion valve (not shown), and an evaporator (not shown), all of which are serially connected to one another in an endless circuit. The compressor 32 is adapted to be driven by a motor 31. The condenser 33 serves to condense a low-boiling medium 34, such as a CFC substitute, by releasing heat from the low-boiling medium to the outside. The receiver 35 serves to retain the condensed low-boiling medium 34. The low-boiling medium pump 36 is adapted to be driven by the aforementioned motor 31 so as to feed the low-boiling medium 34 by applying pressure. The expansion valve serves to reduce pressure of the low-boiling medium 34. The evaporator serves to cause the low-boiling medium 34 that is vaporizing after passing through the expansion valve to absorb heat from the outside. As a conventional system has a circuit of this type, the air-con circuit 37 is also shown in Fig. 2, which illustrates the conventional art.

Using the air-con circuit 37, a low-boiling medium circuit 38 that includes at least the oil cooler 16a, the radiator 16b, the ATAAC 16c, and the turbine 24 is provided to drive the turbine 24 by feeding the low-boiling medium that has been vaporized by waste heat energy recovered from the oil cooler 16a, the radiator 16b, and the ATAAC 16c.

The low-boiling medium circuit 38 includes heat pipes 41a,41b,41c, a feed line 42, and a return line 43. A part of the low-boiling medium fed from the low-boiling medium pump 36 to the expansion valve and the evaporator of the air-con circuit 37, which is installed in the cab of the construction machine, is branched off from the air-con circuit 37 and directed into the oil cooler 16a, the radiator 16b, and the ATAAC 16c through the heat pipes 41a,41b,41c so that the low-boiling medium vaporizes by absorbing heat from the hydraulic oil, the engine cooling water, and the engine intake air. The feed line 42 serves to feed the low-boiling medium that has vaporized in the heat pipes 41a,41b,41c to the turbine 24. The return line 43 serves to return the low-boiling medium from the turbine 24 to the intake end of the compressor 32 of the air-con circuit 37.

Next, the function and effects of the embodiment shown in Fig. 1 is explained hereunder.

In the hydraulic circuit 25 including the main pump 12, nearly all of the thermal energy generated as a result of loss of hydraulic energy at an actuator control valve 13, a relief valve 15, piping, and an actuator 14 causes a rise in the temperature of hydraulic oil. The hot hydraulic oil passes the oil cooler 16a, which is provided in the hydraulic oil return circuit 26. As described above, the heat pipe 41a is provided inside the oil cooler 16a so that the low-boiling medium 34, such as A CFC substitute, to be fed to the evaporator of the air-con circuit 37, which is installed in the construction machine, branches off the air-con circuit 37 and passes through the heat pipe 41a. Therefore, instead of conventional air cooling by a cooling fan 18 driven by a hydraulic cooling motor 17, the low-boiling medium reduces the temperature of the hydraulic oil and recovers thermal energy by removing heat from the hot hydraulic oil in the course of vaporization by the thermal energy of the hydraulic oil in the oil cooler 16a.

The aforementioned turbine 24 is connected to the engine gear unit 22, which is a power transmission system for enabling the engine 11 to drive the main pump. By feeding the vaporized low-boiling medium to the turbine 24, the turbine 24 is driven by the low-boiling medium, and the driving power of the engine 11 to drive the main pump 12 is reduced by the driving torque generated in the turbine 24, thereby enabling reduction of fuel consumption by the engine, as well as effective recovery of thermal energy loss, the thermal energy loss being the energy remaining after subtracting the energy consumed in the hydraulic circuit 25 for effective work.

As described above, thermal energy is generated from the rise in the hydraulic oil temperature resulting from energy loss in the hydraulic circuit 25, in which the main pump 12 is provided. The resulting thermal energy is absorbed by the low-boiling medium, which vaporizes as a result of absorption of the thermal energy. The vaporized low-boiling medium rotates the turbine 24, and the rotated turbine 24 boosts engine power. Thus, the energy is recovered.

In order to increase the energy use efficiency of the engine 11, it is desirable to perform energy recovery with the oil cooler 16a, radiator 16b, and ATAAC 16c simultaneously, rather than with the oil cooler 16a alone.

This can be done by causing a part of the condensed low-boiling medium 34 fed from the low-boiling medium pump 36 to the evaporator of the air-con circuit 37 to branch off from the air-con circuit 37 and pass through the heat pipes 41a,41b,41c, which are respectively provided in the oil cooler 16a, the radiator 16b, and the ATAAC 16c, and, when the low-boiling medium 34 passes through the heat pipes 41a,41b,41c, cooling the hydraulic oil, the radiator water that has become hot, and the engine intake air by absorbing the heat generated from the hydraulic oil, the hot radiator water, and the engine intake air by means of vaporization of the low-boiling medium (refrigerant) 34 instead of conventional air cooling by a cooling fan 18 (shown in Fig. 2).

At that time, the hydraulic oil that has increased in temperature in the hydraulic circuit 25 radiates its heat into the low-boiling medium in the heat pipe 41a of the oil cooler 16a so that the low-boiling medium vaporizes by absorbing the thermal energy of the hydraulic oil and thereby cools the hydraulic oil. At the same time, the radiator water that has become hot as a result of cooling the engine 11 radiates its heat into the low-boiling medium in the heat pipe 41b of the radiator 16b so that the low-boiling medium vaporizes by absorbing the thermal energy of the hot radiator water, thereby cooling the radiator water so that it can serve again as the cooling water. Simultaneously, the engine intake air that has increased in temperature as a result of being compressed by the turbocharger radiates its heat into the low-boiling medium in the heat pipe 41c of the ATAAC 16c so that the low-boiling medium vaporizes by absorbing thermal energy of the engine intake air and thereby cools the engine intake air.

By feeding the low-boiling medium that has vaporized in the heat pipes 41a,41b,41c to the turbine 24, which is connected to the shaft 23 of the engine gear unit 22 and serves to retrieve driving force from the engine 11 to drive not only the main pump 12 but also other elements, the driving power of the engine 11 to drive the main pump 12 is reduced by the driving torque generated in the turbine 24.

For cooling the engine 11, in the place of a conventional hydraulic cooling pump 19 (Fig. 2), the turbine 24, which is a small power recovery turbine adapted to be rotated by the vaporized low-boiling medium, is connected to the engine gear unit 22, which is a power transmission system for enabling the engine 11 to drive the main pump. Therefore, the power loss by the engine 11 resulting from driving a hydraulic cooling pump 19 is mitigated.

As described above, in the place of a conventional hydraulic cooling pump 19, the turbine 24, which is a small power recovery turbine adapted to be rotated by the vaporized low-boiling medium, is connected to the engine gear unit 22, which is a power transmission system for enabling the engine 11 for a construction machine to drive the main pump, and the heat pipes 41a,41b,41c are respectively provided in the oil cooler 16a, the radiator 16b, and the ATAAC 16c so that a part of the low-boiling medium 34 to be fed to the evaporator of the air-con circuit 37, which is normally installed in a construction machine, branches off from the air-con circuit 37 and passes through the heat pipes 41a,41b,41c. With the configuration as above, instead of air cooling by a cooling fan driven by a conventional cooling motor, the system according to the invention vaporizes the low-boiling medium 34 by means of thermal energy of the high temperature fluid in the oil cooler 16a, the radiator 16b, and the ATAAC 16c so as to remove heat from the high temperature fluid, thereby cooling the fluid and also recovering the thermal energy. By thus eliminating the necessity of conventional expensive components, such as a hydraulic cooling motor 17 and a pump 19 for driving a cooling fan, the system according to the invention enables reduction of production costs.

Furthermore, by causing a part of the low-boiling medium fed to the evaporator of the air-con circuit 37, which is installed in the construction machine, to branch off from the air-con circuit 37 and pass through the heat pipes 41a,41b,41c in the oil cooler 16a, the radiator 16b, and the ATAAC 16c, the configuration of the embodiment enables the low-boiling medium to vaporize through absorption of waste heat energy from the oil cooler 16a, the radiator 16b, and the ATAAC 16c. The low-boiling medium that has vaporized in the heat pipes 41a,41b,41c is fed through the feed line 42 to the turbine 24, from which the low-boiling medium is recirculated to the intake end of the compressor 32 of the air-con circuit 37 through the return line 43. Therefore, the configuration described above enables a low-boiling medium circuit 38 to be provided at low cost by effectively using a part of the air-con circuit 37 already incorporated in the construction machine and adding the heat pipes 41a,41b,41c, the feed line 42, and the return line 43.

Furthermore, according to the invention, by using the engine gear unit 22 serving as a power transmission system that branches off from the driving shaft unit 21, by means of which the engine 11 drives the main pump 12, a turbine 24 can be easily installed so that the low-boiling medium that has vaporized in the heat pipes 41a,41b,41c of the oil cooler 16a, the radiator 16b, and the ATAAC 16c can be fed to the turbine 24, which is connected to the engine gear unit 22, by means of which the engine 11 drives the main pump. The low-boiling medium vapor fed to the turbine 24 generates driving torque in the turbine 24, and the resulting driving torque reduces the driving power of the engine 11 to drive the main pump, thereby enabling reduction of fuel consumption by the engine, as well as effective recovery of thermal energy loss in the hydraulic circuit 25.

The features of the invention described above offer the following benefits.

It is possible to improve the energy use efficiency of the engine 11. To be more specific, it is possible to reduce the engine output to as low as approximately 92% so that an engine one class lower can be used, enabling downsizing of the engine 11 and cost reduction.

Furthermore, by lowering the working temperature of hydraulic oil, it is possible to extend the life of hydraulic oil and also to prevent the decrease in viscosity of hydraulic oil, thereby extending the life of sliding portions of hydraulic components.

Furthermore, the invention eliminates the necessity of such expensive components as a motor and a pump for driving a cooling fan. The elimination of such components not only enables downsizing and cost reduction of the cooling unit but also eliminates such noise as wind noises of the cooling fan and prevents clogging of the heat exchanger that would otherwise occur due to dust contained in the cooling air. Yet another benefit of the invention lies in that the system of the invention does not cause thermal pollution of the environment, because it does not radiate heat to the outside. Therefore, the invention realizes an environmentally-friendly cooling system.

According to the embodiment shown in the drawing, by means of the heat pipes 41a,41b,41c passing through the oil cooler 16a and other cooling means, i.e. the radiator 16b and the ATAAC 16c, the low-boiling medium is vaporized by absorption of heat from the oil cooler 16a, the radiator 16b, and the ATAAC 16c so that energy is recirculated to the turbine 24. However, energy may be recirculated to the turbine 24 by using other configuration to which the invention is applicable; for example, the low-boiling medium may be vaporized by absorption of heat from the oil cooler 16a by using the heat pipe 41a passing through the oil cooler 16a, as well as absorption of heat by using either one of the heat pipes 41b,41c respectively passing through the radiator 16b and the ATAAC 16c.

### Industrial Applicability

The present invention is applicable to not only a construction machine, such as a hydraulic excavator, a bulldozer, or a loader, but also any other machine provided with a hydraulic circuit that includes a pump driven by an engine.

## Claims

1. A waste heat energy recovery method comprising steps of:
using a low-boiling medium to absorb waste heat energy from hydraulic oil that has increased in temperature as a result of loss of energy in a hydraulic circuit that includes a pump adapted to be driven by an engine, as well as waste heat energy from another that has increased in temperature as a result of operation of said engine,
rotating a power recovery turbine by utilizing the low-boiling medium that has vaporized as a result of absorbing the heat; and
boosting power of said engine by means of said turbine.

2. A waste heat energy recovery system comprising:
an oil cooler for cooling hydraulic oil that has increased in temperature as a result of loss of energy in a hydraulic circuit that includes a pump adapted to be driven by an engine;
another cooling means for cooling another fluid that has increased in temperature as a result of operation of said engine;
a turbine for recovering driving power, said turbine provided for said engine and adapted to be rotated by energy provided by a vaporized low-boiling medium; and
a low-boiling medium circuit serves to drive said turbine by providing said turbine with the low-boiling medium that has been vaporized by waste heat energy from the oil cooler and the aforementioned other cooling means.

3. A waste heat energy recovery system as claimed in claim 2, wherein:
said other cooling means is a radiator for cooling engine cooling water that has increased in temperature as a result of cooling said engine.

4. A waste heat energy recovery system as claimed in claim 2, wherein:
said other cooling means is an intake air cooler for cooling engine intake air that has increased in temperature as a result of being compressed by a turbocharger.

5. A waste heat energy recovery system comprising:
an oil cooler for cooling hydraulic oil that has increased in temperature as a result of loss of energy in a hydraulic circuit that includes a pump adapted to be driven by an engine;
a radiator for cooling engine cooling water that has increased in temperature as a result of cooling said engine;
an intake air cooler for cooling engine intake air that has increased in temperature as a result of being compressed by a turbocharger;
a turbine for recovering driving power, said turbine provided for said engine and adapted to be rotated by energy provided by a vaporized low-boiling medium.

6. A waste heat energy recovery system as claimed in any one of the claims from claim 2 to claim 5, wherein said a low-boiling medium circuit comprises:
heat pipes that permit a part of the low-boiling medium that is fed from a low-boiling medium pump to an evaporator of an air conditioning device circuit to branch off from said air conditioning device circuit and pass through said oil cooler and said other cooling means so that said low-boiling medium vaporizes by absorbing heat from said oil cooler and said other cooling means, said air conditioning device circuit comprising a compressor, a condenser, a receiver, said low-boiling medium pump, an expansion valve, and said evaporator, all of which are installed in a construction machine and connected to one another in an endless circuit;
a feed line serving to provide said turbine with the low-boiling medium that has been vaporized inside said heat pipes; and
return line serving to recirculate the low-boiling medium from said turbine to the intake end of said compressor of said air conditioning device circuit.

7. A waste heat energy recovery system as claimed in any one of the claims from claim 2 to claim 6, wherein:
said turbine is connected to a power transmission system that branches off from a power transmission unit that enables the engine to drive the pump.

## Amended claims

### Amended claims under Art. 19.1 PCT

**1.** (Cancelled)

**2.** (Currently amended) A waste heat energy recovery system comprising:
an oil cooler for cooling hydraulic oil that has increased in temperature as a result of loss of energy in a hydraulic circuit that includes a pump adapted to be driven by an engine;
another cooling means for cooling another fluid that has increased in temperature as a result of operation of said engine;
a turbine for recovering driving power, said turbine provided for said engine and adapted to be rotated by energy provided by a vaporized low-boiling medium; and
a low-boiling medium circuit serves to drive said turbine by providing said turbine with the low-boiling medium that has been vaporized by waste heat energy from the oil cooler and the aforementioned other cooling means;
wherein said turbine is connected to a power transmission system that branches off from a power transmission unit that enables said engine to drive said pump.

**3.** A waste heat energy recovery system as claimed in claim 2, wherein:
said other cooling means is a radiator for cooling engine cooling water that has increased in temperature as a result of cooling said engine.

**4.** A waste heat energy recovery system as claimed in claim 2, wherein:
said other cooling means is an intake air cooler for cooling engine intake air that has increased in temperature as a result of being compressed by a turbocharger.

**5.** (Currently amended) A waste heat energy recovery system comprising:
an oil cooler for cooling hydraulic oil that has increased in temperature as a result of loss of energy in a hydraulic circuit that includes a pump adapted to be driven by an engine;
a radiator for cooling engine cooling water that has increased in temperature as a result of cooling said engine;
an intake air cooler for cooling engine intake air that has increased in temperature as a result of being compressed by a turbocharger;
a turbine for recovering driving power, said turbine provided for said engine and adapted to be rotated by energy provided by a vaporized low-boiling medium; and
a low-boiling medium circuit serves to drive said turbine by providing said +turbine with the low-boiling medium that has been vaporized by waste heat energy from the oil cooler and said other cooling means;
wherein said turbine is connected to a power transmission system that branches off from a power transmission unit that enables said engine to drive said pump.

**6.** A waste heat energy recovery system as claimed in any one of the claims from claim 2 to claim 5, wherein said a low-boiling medium circuit comprises:
heat pipes that permit a part of the low-boiling medium that is fed from a low-boiling medium pump to an evaporator of an air conditioning device circuit to branch off from said air conditioning device circuit and pass through said oil cooler and said other cooling means so that said low-boiling medium vaporizes by absorbing heat from said oil cooler and said other cooling means, said air conditioning device circuit comprising a compressor, a condenser, a receiver, said low-boiling medium pump, an expansion valve, and said evaporator, all of which are installed in a construction machine and connected to one another in an endless circuit;
a feed line serving to provide said turbine with the low-boiling medium that has been vaporized inside said heat pipes; and
return line serving to recirculate the low-boiling medium from said turbine to the intake end of said compressor of said air conditioning device circuit.

**7.** (Cancelled)
